(19) **Europäisches Patentamt / European Patent Office / Office européen des brevets**

(11) **EP 3 901 798 A1**

(12) **EUROPEAN PATENT APPLICATION**

(43) Date of publication:
**27.10.2021 Bulletin 2021/43**

(51) Int Cl.:
**G06F 21/50** *(2013.01)*    **G06Q 30/02** *(2012.01)*

(21) Application number: **20382334.9**

(22) Date of filing: **24.04.2020**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Telefonica Cybersecurity & Cloud Tech S.L.U.**
**28050 Madrid (ES)**

(72) Inventors:
• **DE LOS SANTOS VILCHEZ, Sergio**
  **28013 MADRID (ES)**
• **BIANZINO, Aruna, Prem**
  **28013 MADRID (ES)**
• **TORRES VELASCO, José**
  **MADRID 28013 (ES)**

(74) Representative: **Herrero & Asociados, S.L.**
   **Cedaceros, 1**
   **28014 Madrid (ES)**

(54) **METHOD FOR RANKING ADVERTISEMENT NETWORKS FOR MOBILE APPLICATIONS AND SERVER THEREOF**

(57)    A method for classifying ad networks to be used by an app, comprising the following steps performed by a server (10):
- for each app in a database (12), computing a quality index of the app based on evaluating parameters related to the app using an ad network and related to other apps using the same ad network;
- for each app using the ad network, computing an aggressivity level of the ad network based on aggressivity parameters which measure intrusivity, impact and effectivity of the ad network in the app;
- ranking all the apps of the database (12) according to the computed quality index and aggressivity level;
- for each ad network, computing a single classification metric based on structural parameters related to the ad network and to the apps using it;
- ranking all the ad networks according to the computed classification metric;
- delivering the rankings of the mobile applications and ad networks to both private users (14) and professional users (15).

EP 3 901 798 A1

# Description

## Field of the invention

The present invention has its application within the information and communications technologies for telecommunication networks, more specifically, relates to the analysis of advertisement contents for mobile applications.

More particularly, the present invention refers to a method and server for the classification of advertisement networks (ad networks) used by mobile applications (apps).

## Background of the invention

An application, also referred to as an "app," generally refers to a software application that executes on a computing device, such as a mobile device (e.g., smartphones, tablets, laptops, etc.).

An ad network is a provider of advertisement content.

Advertisement in mobile applications (apps) is something totally legit that developers use to monetize their work.

Indeed, developers tend to integrate advertisement libraries (ad libraries) into their apps to connect to ad networks which serve the advertisement contents (ads) and provide revenue. In this way, an app developer may import the provider's software development kit (SDK) and reserve some space in the app to display the content issued by the ad network, earning the corresponding revenue on the basis of visualizations, clicks, rating, etc. In order to display relevant advertisement contents to users, these ad libraries collect private information about the user for targeted advertisement. On the other hand, ad libraries can raise serious security and privacy concerns when too many personal data are collected and leaked. Furthermore, this may result in a poor experience for the app user, resulting in reduced usability of the app, increased data traffic, etc. When advertisement (or app aggressivity in general) becomes extreme, the app may become unusable, or may even include unwanted activities in the user terminal, such as cryptocurrency mining, or collection of user data for commercial purpose (e.g., Google and Facebook SDKs). Indeed, it is not infrequent that antiviruses detect such applications as malicious.

US10026098B2 describes some systems and methods for configuring and presenting notices to viewers of electronic ad content regarding targeted advertising techniques used by Internet advertising entities. This solution allows end-users to track and manage how user's actions are captured and used for targeted advertising, targeting web pages, mobile sites, and applications. However, the limitation of this solution is that the user is able to be aware of action capture and other advertisement behavior only at runtime and not in advance (i.e., before installing an app).

CN106651423A describes a method to obtain a quality score for mobile applications. The score rates the aggressivity of the application advertisement and is based on an evaluation of the end-users and other parameters, including the end-device model, operating system, version and connection. However, this method only provides a score for applications, not for ad networks. The method requires subjective input (i.e., the user evaluation) and other parameters related to the end device, as this method makes the evaluation of the app specific to the device. This leads to the disadvantage of reducing the genericity of the obtained ranking. Moreover, the target of this method is limited to the end-user, but it cannot be extended to ad networks and app developers.

US20150213365A1 describes a system to automatically classify apps by identifying third-party data acquisition functions inside the app. The classification is meant to be done at the client terminal and executed at run-time, but not in advance. The described solution only targets the app classification, having as end-target the end-user of the apps, but not the app developers or the ad networks themselves. This existing solution cannot analyze ad networks and their usage.

US9374386B2 describes a system to analyze apps in order to detect malware contained in ad networks. The analysis is based on an app scanning once it is already installed in the end device. This solution only analyses apps, and not ad networks as a whole nor across different apps using them. This solution analyses apps once they are installed on the end device and not in advance to eventually protect users proactively and inform them before installation. This solution only targets end users but not the ad network themselves nor the app developers.

US9558508B2 estimates the quantity, time allocation and kind of advertisement which an app will display, in order to pre-fetch the ad content and save energy on the end-device. The prediction is based on the app previous behavior and on the user previous behavior with the app (i.e., usage preferences). This solution only targets the apps, and not the ad networks. This solution does not provide any quality information of the app and only considers as target the end-users but not the ad networks nor the app developers. This solution does not act before the app installation to inform the user about the app behavior in advance.

US20130268348A1 offers a scoring system for ad networks but does not relate it to the apps, nor it offers information to the end user before installing an app concerning the ad netoworks which the app will contain. The scoring system combines qualitative and quantitative measurements (e.g., latency, scoring in testing, etc. to obtain a ranking to developers and ad network administrators, but the scoring is based on a behavioral analysis of the ad network (e.g., latency), not on a structural analysis.

Therefore, there is a need in the state of the art for providing end-users of apps in mobile devices, the app developers and the providers/administrators of advertisement content in apps (i.e., ad networks) with information about a classification or assessment of apps and the ad networks which are used by the apps, before installing the app or selecting the ads to be integrated in the app.

**Summary of the invention**

The present invention solves the aforementioned problems and overcomes previously explained state-of-art work limitations by providing a method for classifying advertisement networks (ad networks) by gathering data in real time about (mobile) applications (apps), using Artificial Intelligence (AI) algorithms to assess the level of aggressiveness applied to apps by the ad networks which the app integrates. Each app may hence be categorized on the basis of the behavior and aggressiveness applied by all the advertisements integrated in the app, and be individually evaluated, as well as each single advertisement integrated in each app.

Data collection from the apps to obtain specified parameters used for the assessment of the ad networks is continuous through time (e.g., daily). This means that a periodical check is performed to look for new applications and new versions of the analyzed applications to update the collected statistics and rankings.

On the basis of the analyzed parameters, a ranking may be established among different ad networks, as well as a quality grade may be calculated for each individual ad network.

On the one hand, variations of the ad networks ranking over time may insight variations in the advertisement market, which may be useful to developers and ad networks themselves. At the same time, ad networks are characterized on the basis of their characteristics and on the basis of the average apps using them. This analysis may result helpful for developers when selecting the ad network to be integrated in their app. Finally, this analysis may be of use for the ad network in showing to their customers (advertisers) the impact of including such ad network (number of apps, number of downloads, quality of the apps including it, life state and lifetime of the apps, etc.).

In addition, on the other hand, end users may receive an evaluation of an app, on the basis of its advertisement aggressivity and selected ad network, before installing them, or after a new version is released after having installed them. It may even be possible for a third-party to use this data to offer to the end user an analysis of his/her mobile devices.

An aspect of the present invention refers to a computer-implemented method for classifying ad networks to be used by apps (mobile applications) which comprises the following steps:

- for each mobile application stored in a database, computing, by a server a quality index of the mobile application based on evaluating parameters related to the mobile application using an ad network and evaluating parameters related to other similar mobile applications which use the same ad network;
- for each mobile application using the ad network, computing, by the server, an aggressivity level of the ad network based on aggressivity parameters which measure intrusivity, impact and effectivity of the ad network in the mobile application (in a preferred embodiment, the aggressivity level of the ad network takes into account aggressivity parameters of the present and the past, i.e., aggressivity parameters of the mobile application in its current version and previous versions, as well as aggressivity parameters of dead applications which used the ad network in the past);
- ranking, by the server, all the mobile application stored in the database according to the quality index and aggressivity level computed for each mobile application;
- for each ad network, computing, by the server, a single classification metric of the ad network based on structural parameters related to the ad network;
- ranking, by the server, all the ad networks according to the computed classification metric;
- delivering, by the server, the ranking of the mobile applications and ad networks to both private users and professional users, the private users being end-users of the mobile applications, and professional users being developers of the mobile applications or administrators of the ad networks.

Another aspect of the present invention refers to a server comprising processing means implementing the method described before.

The method and system in accordance with the above described aspects of the invention have a number of advantages with respect to the aforementioned prior art, which can be summarized as follows:

- The present invention offers a global view on the status of paid advertisement in mobile devices and of its ecosystem, as well as a specific view of the advertisement status of single applications, on the basis of a multidimensional analysis. This analysis is not a behavioral analysis of the ad network but a structural analysis, which includes the use of parameters such as specific system calls, required permissions, etc. This solution provides hence an overview of the state of paid advertising on mobile devices, which helps both app developers and app users to choose which ad networks and which apps to use, respectively, with a mind on security and privacy.
- The present invention provides users (end-users, app developers and ad networks) with an advanced knowledge of an app and an ad network, in advance, before selecting the app and its integrated ad networks and before installing them. This knowledge in advance allows the end-user to be saved from eventual unwanted behaviour.

- The information provided by the present invention is useful for many kinds of users, both private end-users and professional users (including both ad networks/providers and app developers). A ranking is synthetized to allow an easier understanding for the final user.

- The present invention allows a periodical refresh (update) of the available information, both average and specific data being available and concerning both apps and ad networks.

These and other advantages will be apparent in the light of the detailed description of the invention.

## Description of the drawings

For the purpose of aiding the understanding of the characteristics of the invention, according to a preferred practical embodiment thereof and in order to complement this description, the following Figures are attached as an integral part thereof, having an illustrative and non-limiting character:

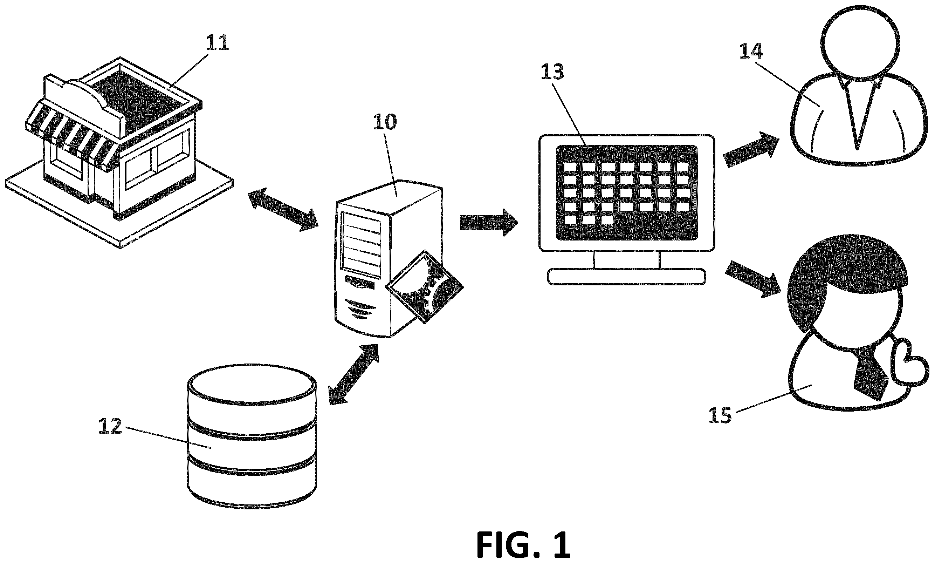

Figure 1 shows a schematic diagram of the system architecture and parties involved in implementing the method for classifying ad networks and apps, according to a preferred embodiment of the invention.

## Preferred embodiment of the invention

The embodiments of the invention can be implemented in a variety of architectural platforms, operating and server systems, devices, systems, or applications. Any particular architectural layout or implementation presented herein is provided for purposes of illustration and comprehension only and is not intended to limit aspects of the invention.

A preferred embodiment of the invention relates to a method of assessment and classification of ad networks for apps.

- For each application including a specific ad network, the app is analyzed to assess its quality and potential risks, evaluating parameters such as number of detections by antivirus, number of requested permissions, kind of requested permissions, average evaluation in the app market by end-users, lifetime in the app market, etc. This analysis includes an analysis of the app code (specific system calls, required permissions, etc.). This analysis allows evaluating the typical usage of each ad network and the health of the apps using it. An example of quality indexing for an app may be:

$$Q_a = \omega_1 \eta_1 \alpha_1 + \omega_2 \eta_2 \alpha_2 + \ldots + \omega_i \eta_i \alpha_i$$

where $Q_a$ is the quality index of app a,

$\eta_i$ is a normalization factor, such that

$$\eta_i \, MAX \, \alpha_i = 1$$

$\alpha_i$ are the different evaluating considered parameters, and
$\omega_i$ is a weight factor, such that

$$\Sigma_i \, \omega_i = MAX \, Q$$

so that the resulting quality index Q may be expressed in the scale of choice, for instance from 0 to 10.

The weight factor $\omega_i$ may be negative. For instance, if the weight factor of the average evaluation is positive, the weight factor applied to the number of detections by antivirus is negative.

An example of quality index for an app may consider the following parameters (listed with the sign of the weight factor $\omega$ and with the corresponding normalization factor $\eta$):

- number of downloads (positive weight $\omega$, $\eta$: maximum number of downloads for an app in the marketplace),

- number of days spent in the marketplace (positive weight $\omega$, $\eta$: maximum number of days sect in the marketplace by an app),

- number of detections by antivirus (negative weight $\omega$, $\eta$: maximum number of antivirus detections for an app),

- average user evaluation (positive weight $\omega$, $\eta$: maximum user evaluation, usually $\eta = 5$),

- number of required permissions to the device resources (negative weight $\omega$, $\eta$: maximum number of required permissions by an app),

- presence of banners (negative weight $\omega$, normalization factor $\eta = 1$),

- presence of ad videos (negative weight $\omega$, normalization factor $\eta = 1$),

- full screen ad (negative weight $\omega$, normalization factor $\eta = 1$),

- number of detected ads (negative weight $\omega$, $\eta$: maximum number of detected ads in an app),

- number of apps with the same ad network that have been withdrawn from the market (negative wieght $\omega$, $\eta$: total number of apps using the same ad network).

The weight factors $\omega_i$ are properly tuned to highlight the aspects that the quality index Q of the app considers as more significant. For instance, higher weights for the number of detections by antivirus, better highlights the app potential risk; while higher weight for the app lifetime and average evaluation, better highlights the app quality.

- For each app including a specific ad network, the level of aggressivity of the ad network is evaluated (e.g., as a funtion of three factors: intrusivity, impact and effectivity) for both the present and the past (taking into account previous versions of the apps using the ad network as well as dead apps which used the ad network but not exist any longer in the marketplace). This evaluation of the ad network aggresivity level L is performed similarly to the previous point, $L = \Sigma_i \ \omega_i \eta_i \beta_i$, but only considering aggressivity parameters $\beta_i$ (i.e., presence of banners, presence of videos, presence of full-screen ads, number of detected ads, number of detections by antivirus, etc.).

- For each ad network, a set of (structural) parameters is evaluated such as number of apps including said ad network, rate of dead apps among the applications including said ad network, average lifetime of the apps including the ad network, average user evaluation among the apps including the ad network, average aggressivity among the apps including said ad network, etc. These parameters, related to the ad network and to the apps using it, may be combined similarly as explained above to result in a single metric M, in order to ease the ad network evaluation and comparison, and to establish a ranking among different ad networks.

A possible architecture implementing the described method (Analysis Service) is depicted in Figure 1. The main solution is implemented in a server (10), which periodically checks the app marketplace or mobile application provider (11) for new apps and new versions of known apps. Apps are stored in a database (12) and periodically analyzed and ranked as described above by the server (10). The server (10) analyses and ranks also the different ad networks as described above. The obtained results providing information about the apps and their ads and the ranking of ad networks and apps may be delivered (13) to the users (14, 15), e.g. to a display to be seen by both private users (14) and professional users (15), directly consulting the server (10) and being directly integrated by the app provider (11), i.e., the marketplace bonded to the apps which they are referring to.

Here a summary of the info and advantages which the different kind of users (14, 15) may get from the described solution is presented:

- End Users or private users (14), which are the users of mobile devices using apps and who select apps to be used. The private users (14) consult the server (10) to get information (in advance) about eventual security risks connected to a specific app as well as the level of aggressivity and intrusivity of the ad network(s) which the app integrates. This information is available to the private users (14) before installing an app, and also the information is periodically updated and delivered to the private users (14) after having installed the app.

∘ Professional Users (15) may be app developers or ad network administrators/providers: The app developers select an ad network from the app provider (11) to be integrated in their apps and they can get from the server (10) information about eventual security risks connected to a specific ad network, as well as their ranking, the status about apps integrating them and the average ranking of apps integrating them. All this information is available for app developers both before selecting an ad network and after having selected the ad network as the available information is periodically updated by the server (10). Ad network administrators are able to know the ranking of their ad network and how it stands compared to the others by consulting the server (10), as well as they can get the status about the apps integrating the adds from the ad network and the corresponding average ranking. This information is available for the ad network administrators periodically.

Note that in this text, the term "comprises" and its derivations (such as "comprising", etc.) should not be understood in an excluding sense, that is, these terms should not be interpreted as excluding the possibility that what is described and defined may include further elements, steps, etc.

## Claims

1. A computer-implemented method for classifying ad networks to be used by a mobile application, **characterized by** comprising:

   - for each mobile application stored in a database (12), computing, by a server (10) a quality index of the mobile application based on evaluating parameters related to the mobile application using an ad network and evaluating parameters related to other mobile applications using the same ad network;
   - for each mobile application using the ad network, computing, by the server (10), an aggressivity level of the ad network based on aggressivity parameters which measure intrusivity, impact and effectivity of the ad network in the mobile application;
   - ranking, by the server (10), all the mobile application stored in the database (12) according to the quality index and aggressivity level computed for each mobile application;
   - for each ad network, computing, by the server (10), a single classification metric of the ad network based on structural parameters related to the ad network;
- ranking, by the server (10), all the ad networks according to the computed classification metric;
- delivering, by the server (10), the ranking of the mobile applications and the ranking of ad networks to both private users (14) and professional users (15), the private users (14) being end-users of the mobile applications, and professional users (15) being developers of the mobile applications or administrators of the ad networks.

2. The method according to claim 1, wherein the quality index Q is computed for the mobile application as:

$$Q = \omega_1\eta_1\alpha_1 + \omega_2\eta_2\alpha_2 + \ldots + \omega_i\eta_i\alpha_i$$

where $\alpha_i$ are the evaluating parameters and i denotes the number of evaluating parameters,
$\eta_i$ is a normalization factor such that $\eta_i \, \mathrm{MAX} \, \alpha_i = 1$, and
$\omega_i$ is a weight factor, positive or negative, such that $\Sigma_i \, \omega_i = \mathrm{MAX} \, Q$.

3. The method according to any preceeding claim, wherein the evaluating parameters are selected from: number of downloads for the mobile application from the application provider (11), number of days spent by the mobile application in the application provider (11), average user evaluation of the mobile application, number of permissions to mobile device resources required by the mobile application, and kind of said permissions.

4. The method according to any preceeding claim, wherein the aggressivity level L of the ad network for the mobile application is computed as:

$$L = \Sigma_i \, \omega_i\eta_i\beta_i$$

where $\beta_i$ are the aggressivity parameters and i denotes the number of aggressivity parameters,
$\eta_i$ is a normalization factor such that $\eta_i \, \mathrm{MAX} \, \beta_i = 1$, and
$\omega_i$ is a weight factor, positive or negative, such that $\Sigma_i \, \omega_i = \mathrm{MAX} \, L$.

5. The method according to any preceeding claim, wherein the aggressivity parameters are selected from: number of detections by antivirus for the mobile application, presence of banners in the mobile application, presence of advertisement videos in the mobile application, presence of full screen advertisements in the mobile application, number of detected advertisements in the mobile application.

6. The method according to any preceeding claim, wherein the aggressivity parameters used to compute the aggressivity level L of the ad network include aggressivity parameters of all the versions of the mobile application using the ad network and aggressivity parameters of dead mobile applications which used the ad network.

7. The method according to any preceeding claim, wherein the single metric M of the ad network is computed as:

$$M = \Sigma_i \, \omega_i\eta_i\varphi_i$$

where cpi are the structural parameters of the ad network and i denotes the number of structural parameters,
$\eta_i$ is a normalization factor such that $\eta_i \, \mathrm{MAX} \, \varphi_i = 1$, and
$\omega_i$ is a weight factor, positive or negative, such that $\Sigma_i \, \omega_i = \mathrm{MAX} \, M$.

8. The method according to any preceeding claim, wherein the structural parameters of the ad network are selected from: number of mobile applications using the ad network, rate of dead applications among the mobile applications using the ad network, average lifetime of the mobile applications using the ad network, average user evaluation among the mobile applications using the ad network, and average aggressivity level among the mobile applications using the ad network.

9. The method according to any preceeding claim, wherein the ranking is delivered to the private user (14) before installing the mobile application by the private user (14).

10. The method according to any preceeding claim, wherein the ranking is delivered to the professional user (15) which is an app developer before selecting the ad network to be used in a specific mobile application by the app developer developing the specific mobile application.

11. The method according to any preceeding claim, wherein the ranking is delivered to the professional user (15), which is an ad network administrator, periodically updated.

12. The method according to any preceeding claim, further comprising periodically checking, by the server (10), the mobile application provider (11) to update the mobile applications and versions of mobile application stored in the database (12).

13. The method according to any preceeding claim, wherein the ranking is periodically updated and delivered to the private users (14) and the professional users (15).

14. A server (10) for classifying ad networks to be used by a mobile application, **characterized by** comprising a processor configured to:

- for each mobile application stored in a database (12) to which the processor has access, compute a quality index of the mobile application based on evaluating parameters related to the mobile application using an ad network and evaluating parameters related to other mobile applications using the same ad network;
- for each mobile application using the ad network, compute an aggressivity level of the ad network based on aggressivity parameters which measure intrusivity, impact and effectivity of the ad network in the mobile application;
- define a first ranking of all the mobile application stored in the database (12) according to the quality index and aggressivity level computed for each mobile application;
- for each ad network, compute a single classification metric of the ad network based on structural parameters related to the ad network;
- define a second ranking of all the ad networks according to the computed classification metric;
- delivering the first ranking of the mobile applications and the second ranking of the ad networks to both private users (14) and professional users (15), the private users (14) being end-users of the mobile applications, and professional users (15) being developers of the mobile applications or administrators of the ad networks.

**FIG. 1**

EP 3 901 798 A1

Europäisches
Patentamt

European
Patent Office

Office européen
des brevets

# EUROPEAN SEARCH REPORT

**Application Number**

EP 20 38 2334

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2017/205802 A1 (APP ANNIE INC [US]) 30 November 2017 (2017-11-30) <br> * paragraph [0004] - paragraph [0005] * <br> * paragraph [0014] - paragraph [0018] * <br> * paragraph [0022] - paragraph [0024] * <br> * paragraph [0029] - paragraph [0031] * <br> * claims 1-6; figures 2,3 * <br> ----- | 1-14 | INV. <br> G06F21/50 <br> G06Q30/02 |
| X | Qicheng Lin: "User Privacy Leakage in Location-based Mobile Ad Services User Privacy Leakage in Location-based Mobile Ad Services", <br> Computer Science and Engineering: Theses, Dissertations, and Student Research, <br> 15 August 2019 (2019-08-15), XP055731751, <br> Retrieved from the Internet: <br> URL:https://digitalcommons.unl.edu/cgi/viewcontent.cgi?article=1201&context=computerscidiss <br> [retrieved on 2020-09-17] <br> * page 3, line 1 - page 3, line 24 * <br> * page 9, line 17 - page 10, line 2 * <br> * page 11, line 10 - page 12, line 12 * <br> * page 13, line 18 - page 14, line 13 * <br> * page 26, line 1 - page 26, line 21 * <br> * page 27, line 10 - page 28, line 1 * <br> * page 31, line 5 - page 34, line 5 * <br> * page 44, line 1 - page 44, line 16 * <br> ----- | 1-14 | |

TECHNICAL FIELDS SEARCHED (IPC)

G06F
G06Q

The present search report has been drawn up for all claims

| Place of search | Date of completion of the search | Examiner |
|---|---|---|
| Munich | 17 September 2020 | Sauzon, Guillaume |

# EP 3 901 798 A1

## ANNEX TO THE EUROPEAN SEARCH REPORT
## ON EUROPEAN PATENT APPLICATION NO.

EP 20 38 2334

This annex lists the patent family members relating to the patent documents cited in the above-mentioned European search report.
The members are as contained in the European Patent Office EDP file on
The European Patent Office is in no way liable for these particulars which are merely given for the purpose of information.

17-09-2020

| Patent document cited in search report | Publication date | Patent family member(s) | Publication date |
|---|---|---|---|
| WO 2017205802 A1 | 30-11-2017 | US 2017345056 A1<br>WO 2017205802 A1 | 30-11-2017<br>30-11-2017 |

EPO FORM P0459

**REFERENCES CITED IN THE DESCRIPTION**

**Patent documents cited in the description**

- US 10026098 B2
- CN 106651423 A
- US 20150213365 A1
- US 9374386 B2
- US 9558508 B2
- US 20130268348 A1